# FASCICULE DE BREVET EUROPEEN

(11) **EP 4 435 275 B1**
(45) Date de publication et mention de la délivrance du brevet: **15.07.2026**
(21) Numéro de dépôt: 24165485.4
(22) Date de dépôt: 22.03.2024
(51) Int. Cl.: F16B 2/24, F24C 15/02

(54) **AGRAFE POUR JOINT DE FOUR DOMESTIQUE ET JOINT DE FOUR COMPRENANT CETTE AGRAFE**
KLEMME FÜR EINE DICHTUNG EINES HAUSHALTSOFENS UND OFENDICHTUNG MIT DIESER KLEMME
CLIP FOR DOMESTIC OVEN JOINT AND OVEN JOINT COMPRISING SAID CLIP

(30) Priorité: 24.03.2023 FR 2302825
(43) Date de publication de la demande: 25.09.2024
(73) Titulaire: Omerin SAS, 63600 Ambert (FR)
(72) Inventeur: MURAT, Frédéric, 69440 MORNANT (FR)
(74) Mandataire: Germain Maureau

(56) Documents cités:
- CN-A- 105 422 557
- US-A1- 2010 251 621
- US-A1- 2018 180 217
- US-A1- 2022 373 188
- US-B2- 7 093 838

## Description

La présente invention concerne une agrafe pour joint de four, un joint pour four comprenant cette agrafe.

### Etat de la technique

Les fours domestiques sont pourvus de joints de garniture et d'étanchéite sur lesquels la porte du four vient s'appuyer lorsque celle-ci est fermée.

Les joints de garniture et d'étanchéité pour porte de four comprennent traditionnellement un treillis métallique tubulaire par dessus lequel est tressée une garniture textile dans un matériau résistant à haute température. Pour fixer et maintenir en position ces joints sur le four, il est connu d'utiliser un clip ou agrafe, classiquement réalisé par pliage d'un fil métallique. Cette agrafe présente une partie de retenue dans le joint et une partie de retenue dans une ouverture pratiquée dans la structure du four comme le montre par exemple le document FR3039255.

On connait également, par les documents US2022373188 et CN105422557 des agrafes ayant une partie de retenue en forme de losange.

Compte tenu de la température élévée qui peut regner dans le four - jusqu'à 500 °C dans un programme de nettoyage par pyrolyse - ; il importe que le joint de porte ne puisse pas être déposé par un utilisateur.

Il est également important que le montage de ce joint sur la structure du four soit facile.

Dans ce contexte, la présente invention a pour but d'améliorer la fixation sur un four domestique d'un joint de garniture et d'étanchéité pour porte.

L'invention a pour objet une agrafe pour joint de four domestique formée dans un segment de fil d'acier, l'agrafe comprenant une embase destinée à être insérée dans un joint tubulaire tressé, l'embase présentant une géométrie polygonale inscrite dans un plan P et, reliée à ladite embase, une tête destinée à être insérée dans une ouverture pratiquée dans une structure de four, la tête présentant deux montants inscrits dans un plan P' orthogonal au plan P et une pointe orientée selon un plan P" qui forme un angle α aigu avec le plan P', la pointe comprenant deux brins qui convergent depuis l'extrémité des montants en direction de l'embase. La pointe agit comme un ancrage lorsque l'agrafe est engagée dans une ouverture pratiquée dans la structure d'un four.

Dans un mode de réalisation préféré, la tête présente un montant relié à l'embase et un montant orienté de manière divergente en direction de l'embase. La présence d'un montant orienté de manière divergente permet que la tête soit sous contrainte dans une direction longitudinale et ainsi assure un blocage supplémentaire.

Selon une possibilité, l'embase présente une géométrie en pentagone qui comprend un brin transversal relié à deux brins longitudinaux parallèles; chaque brin longitudinal est prolongé par un brin oblique, l'un des brins oblique étant relié à la tête.

Selon une possibilité, le montant est relié à un brin oblique assurant la liaison entre l'embase et la tête tandis que le montant opposé est orienté de manière oblique divergente en direction de l'embase.

Selon une possibilité, la tête est pourvue d'un bec qui prolonge le montant de manière perpendiculaire à celui-ci.

Selon une possibilité, le bec tangente le brin transversal.

Selon un aspect l'invention concerne un joint d'isolation thermique pour un four domestique, le joint comprenant au moins une agrafe présentant une ou plusieurs des caractéristiques précitées.

D'autres caractéristiques et avantages de la présente invention ressortiront clairement de la description détaillée ci-après d'un mode de réalisation, donné à titre d'exemple non limitatif, en référence aux dessins annexés dans lesquels :
Fig.1 est une vue de face d'une agrafe selon une forme de réalisation de l'invention ;
Fig.2 est une vue de coté de l'agrafe de la figure 1 ;
Fig.3 est une vue en perspective de l'agrafe de la figure 1 ;
Fig.4 est en vue d'une autre forme de réalisation d'une agrafe ;
Fig.5 est une vue avec arrachement partiel d'un joint de four domestique ;
Fig.6 est une vue d'un joint équipé d'une agrafe ;
Fig.7 est une vue montrant la pose d'un joint dans une ouverture d'une structure de four domestique ;
Fig .8 est une vue d'une face intérieure d'une structure de four montrant une agrafe engagée dans une ouverture.

Dans ses différentes formes de réalisation, l'agrafe 1 selon l'invention est formée d'un segment de fil d'acier inoxydable qui peut, par exemple, être d'un diamètre de 0.8 mm. Ce segment de fil d'acier est façonné par pliage pour former l'agrafe 1 selon l'invention.

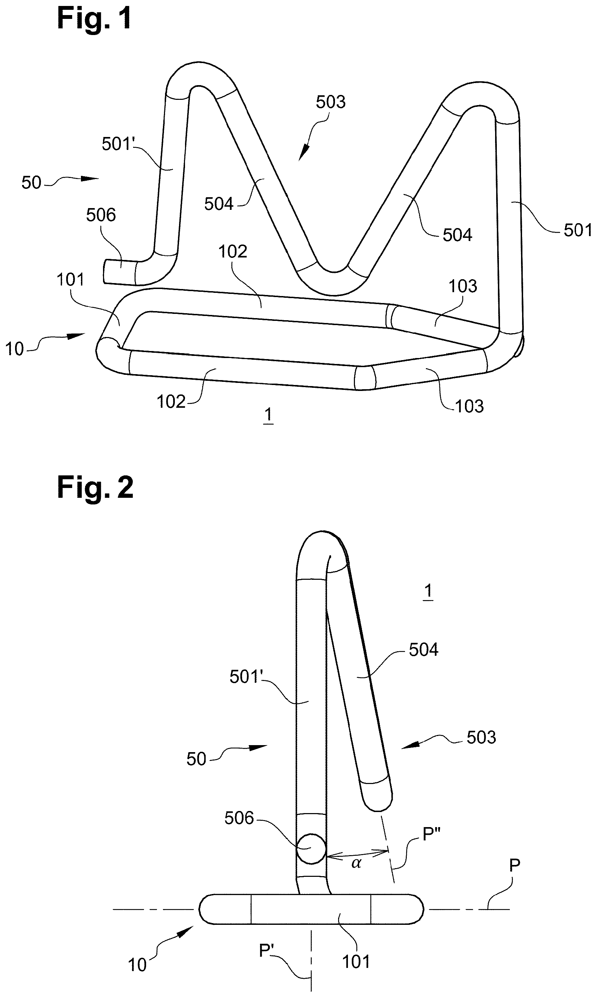

Comme on peut le voir, par exemple, à la figure 1, l'agrafe 1 comprend une embase 10 destinée à être insérée dans un joint 200 qui sera décrit plus loin et une tête 50 destinée à être insérée dans une ouverture rectangulaire 300 formée dans la structure d'un four domestique.

L'embase 10 est inscrite dans une plan P et la tête 50 est inscrite dans un plan P' perpendiculaire au plan P (cf. figure 2).

L'embase 10 présente une géométrie polygonale qui, dans l'exemple illustré, est un pentagone qui présente un brin transversal 101 relié à deux brins longitudinaux 102 parallèles; chaque brin longitudinal 102 est prolongé par un brin oblique 103.

Le tête 50 présente une géométrie en M formée de deux montants coplanaires 501. Les deux montants 501 sont de préférence non parallèle comme cela est montré sur les figures tout en restant coplanaires. Un montant 501 est relié à un brin oblique 103 ce qui assure la liaison entre l'embase 10 et la tête 50 tandis que le montant opposé 501' est orienté de manière légèrement oblique divergente en direction de l'embase 10.

La tête 50 comprend de plus une pointe 503 qui est formée de deux brins 504 qui convergent depuis l'extrémité des montants 501 en direction de l'embase 10 et constitue la partie centrale du M.

Un point qu'il convient de noter est que la pointe 503 se trouve elle-même dans un plan P" qui est décalé angulairement d'un angle α par rapport au plan P comme le montre la figure 2. En pratique, l'angle α peut être compris entre 3° et 15°.

La tête 50 peut, par ailleurs, être pourvue d'un bec 506 qui prolonge un montant 501' de manière perpendiculaire à celui-ci.

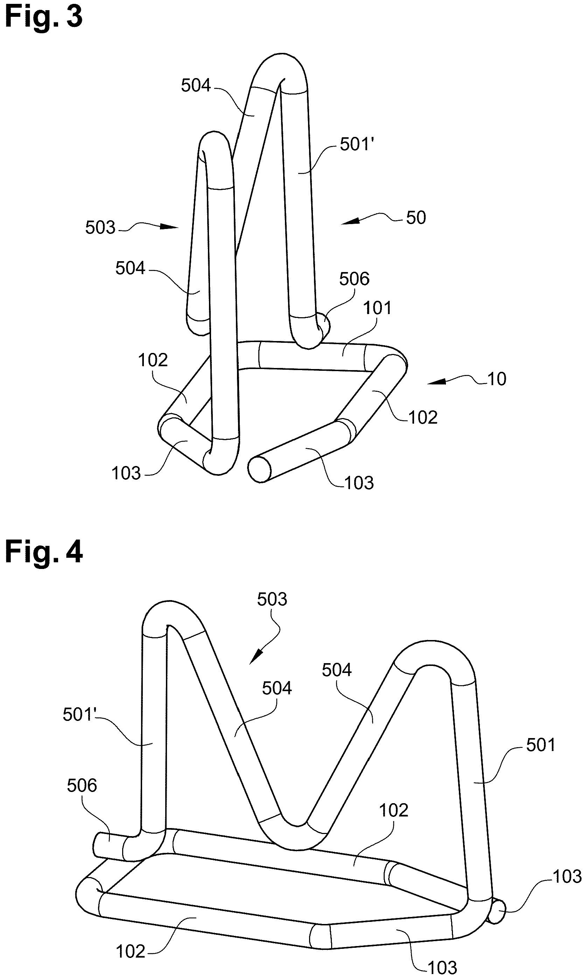

La figure 4 montre une variante dans laquelle le bec 506 peut venir tangenter le brin transversal 101 de l'embase 10. Dans d'autres formes de réalisation, le bec 506 est à distance du brin transversal 101 de l'embase 10.

Les brins rectilignes sont reliés par des portions arrondies formées par le cambrage du segment de fil d'acier par un outil approprié.

Les dimensions de l'embase peuvent être, par exemple, de l'ordre de 14 mm par 6 mm tandis que la tête peut présenter une hauteur de 12 mm.

Le joint 200 peut comprendre un treillis 202 métallique intérieur tubulaire, et une garniture 204 tressée de textile qui vient par-dessus le treillis 202 métallique. La garniture 204 tressée comprend un matériau textile thermiquement isolant et adapté pour résister à des températures de l'ordre de 400°C à 500°C; cette garniture 204 tressée peut être, par exemple, en fibres de verre. Un ruban adhésif (non représenté) peut être prévu aux extrémités du joint 200 pour que la tresse de la garniture 204 tressée ne forme pas un foisonnement de fibres.

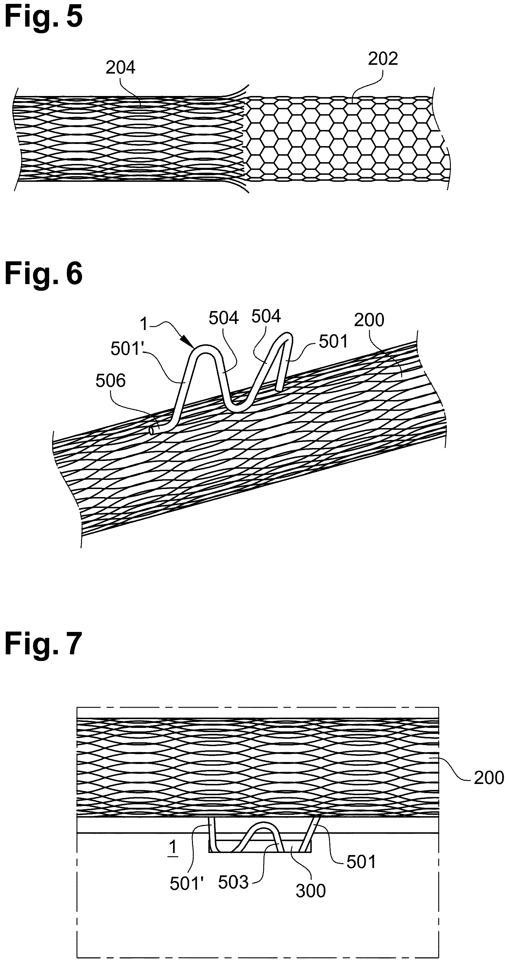

En pratique, une série d'agrafes 1 est insérée lors du tressage du joint lors de sa fabrication selon un pas qui correspond à la distance qui sépare deux ouvertures du four. L'embase 10 est prise entre le treillis métallique 202 et la garniture tressée 204. Comme on peut le voir sur la figure 6, le bec 506 vient en appui contre la garniture tressée 204.

Le joint 200 ainsi équipé, peut être fixé sur le four. Pour cela, le joint 200 est approché du four de manière à ce que les agrafes 1 viennent en regard des ouvertures pratiquées 300 dans la structure du four.

Comme on le voit sur la figure 7, la tête 50 de l'agrafe est introduite dans l'ouverture. La pointe 503 fléchit pour se rapprocher du plan P' ce qui permet son introduction dans l'ouverture 300 et le montants 501' fléchit pour se rapprocher du montant 501. Après être entièrement engagée dans l'ouverture 300, la pointe 503 reprend, de manière élastique, sa position initiale et réalise un ancrage du joint 200.

En cas de traction exercée sur le joint 200, la pointe 503 aura tendance à s'écarter du plan P' ce qui renforcera la retenue du joint 200.

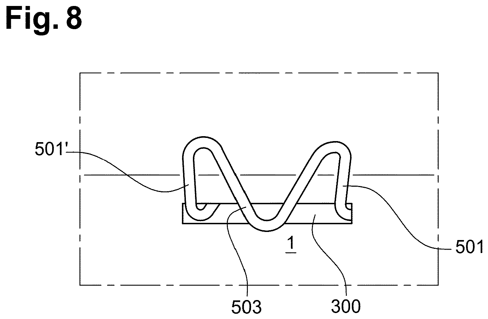

Comme le montre la figure 8 qui montre la face intérieure de la structure de four, l'agrafe 1 réalise une retenue longitudinale grâce aux montants 501 et 501' qui sont contraints dans cette direction et une retenue transversale grâce à la pointe 503 qui vient en appui contre la surface intérieure de la structure de four ce qui rend difficile un retrait accidentel ou intentionnel du joint. En outre, l'agrafe empêche la survenance de jeu entre le joint 200 et le four au cours de la vie du four.

## Revendications

1. Agrafe (1) pour joint de four domestique formée dans un segment de fil d'acier, l'agrafe (1) comprenant une embase (10) destinée à être insérée dans un joint (200) tubulaire tressé, l'embase (10) présentant une géométrie polygonale inscrite dans un plan P et, reliée à ladite embase, une tête (50) destinée à être insérée dans une ouverture (300) pratiquée dans une structure de four, la tête (50) présentant deux montants (501, 501') inscrits dans un plan P' orthogonal au plan P et une pointe (503) orientée selon un plan P" qui forme un angle α aigu avec le plan P', **caractérisée en ce que** la pointe (503) comprend deux brins (504) qui convergent depuis l'extrémité des montants (501) en direction de l'embase (10).

2. Agrafe selon la revendication 1, **caractérisée en ce que** la tête (50) présente un montant (501) relié à l'embase (10) et un montant (501') orienté de manière divergente en direction de l'embase (10).

3. Agrafe selon l'une des revendications 1 à 2, **caractérisée en ce que** l'embase (10) présente une géométrie en pentagone qui comprend un brin transversal (101) relié à deux brins longitudinaux (102) parallèles, chaque brin longitudinal (102) est prolongé par un brin oblique (103), l'un des brins oblique (103) étant relié à la tête (50).

4. Agrafe selon la revendication 3, **caractérisée en ce qu'**un montant (501) est relié à un brin oblique (103) assurant la liaison entre l'embase (10) et la tête (50) tandis que le montant opposé (501') est orienté de manière oblique divergente en direction de l'embase (10).

5. Agrafe selon l'une des revendication 1 à 4, **caractérisé en ce que** la tête est pourvue d'un bec (506) qui prolonge le montant (501') de manière perpendiculaire à celui-ci.

6. Agrafe selon la revendication 5 lorsqu'elle dépend de la revendication 4, **caractérisé en ce que** le bec (506) tangente le brin transversal (101).

7. Joint d'isolation thermique pour un four domestique, le joint comprenant au moins une agrafe (1) selon l'une des revendications 1 à 6.

## Patentansprüche

1. Klammer (1) für eine Dichtung für einen Haushaltsbackofen, die aus einem Stahldrahtsegment gebildet ist, wobei die Klammer (1) eine Basis (10) umfasst, die dazu bestimmt ist, in eine geflochtene, rohrförmige Dichtung (200) eingesetzt zu werden, wobei die Basis (10) eine polygonale Geometrie aufweist, die in einer Ebene P aufgenommen ist, und einen mit der Basis verbundenen Kopf (50), der dazu bestimmt ist, in eine Öffnung (300) eingesetzt zu werden, die in einer Ofenstruktur angebracht ist, wobei der Kopf (50) zwei Schenkel (501, 501'), die in einer Ebene P' orthogonal zur Ebene P aufgenommen sind, sowie eine Spitze (503) aufweist, die entlang einer Ebene P" ausgerichtet ist, die einen spitzen Winkel α zur Ebene P' bildet, **dadurch gekennzeichnet, dass** die Spitze (503) zwei Schenkel (504) umfasst, die vom Ende der Stützen (501) in Richtung der Basis (10) konvergieren.

2. Klammer nach Anspruch 1, **dadurch gekennzeichnet, dass** der Kopf (50) einen mit der Basis (10) verbundenen Schenkel (501) und einen in Richtung der Basis (10) divergierend ausgerichteten Schenkel (501') aufweist.

3. Klammer nach einem der Ansprüche 1 bis 2, **dadurch gekennzeichnet, dass** die Basis (10) eine fünfeckige Geometrie aufweist, die einen Querstrang (101) umfasst, der mit zwei parallelen Längssträngen (102) verbunden ist, wobei jeder Längsstrang (102) durch einen schrägen Strang (103) verlängert ist, wobei einer der schrägen Stränge (103) mit dem Kopf (50) verbunden ist.

4. Klammer nach Anspruch 3, **dadurch gekennzeichnet, dass** ein Schenkel (501) mit einem schrägen Strang (103) verbunden ist, der die Verbindung zwischen der Basis (10) und dem Kopf (50) sicherstellt, während der gegenüberliegende Schenkel (501') schräg divergierend in Richtung der Basis (10) ausgerichtet ist.

5. Klammer nach einem der Ansprüche 1 bis 4, **dadurch gekennzeichnet, dass** der Kopf mit einer Nase (506) versehen ist, die den Schenkel (501') senkrecht zu diesem verlängert.

6. Klammer nach Anspruch 5, wenn sie von Anspruch 4 abhängt, **dadurch gekennzeichnet, dass** die Nase (506) den Querstrang (101) tangiert.

7. Wärmeisolierdichtung für einen Haushaltsbackofen, wobei die Dichtung mindestens eine Klammer (1) nach einem der Ansprüche 1 bis 6 umfasst.

## Claims

1. A clip (1) for domestic oven gasket formed from a segment of steel wire, the clip (1) comprising a base (10) intended to be inserted into a braided tubular gasket (200), the base (10) having a polygonal geometry lying in a plane P and, connected to said base, a head (50) intended to be inserted into an opening (300) made in an oven structure, the head (50) having two uprights (501, 501') lying in a plane P', orthogonal to the plane P, and a tip (503) oriented in a plane P" which forms an acute angle α with the plane P', **characterized in that** the tip (503) comprises two strands (504) which converge from the ends of the uprights (501) toward the base (10).

2. The clip according to claim 1, **characterized in that** the head (50) has one upright (501) connected to the base (10) and one upright (501') oriented in a diverging manner toward the base (10).

3. The clip according to any of claims 1 and 2, **characterized in that** the base (10) has a pentagonal geometry which comprises a transverse strand (101) connected to two parallel longitudinal strands (102), each longitudinal strand (102) being extended by an oblique strand (103), one of the oblique strands (103) being connected to the head (50).

4. The clip according to claim 3, **characterized in that** one upright (501) is connected to an oblique strand (103) providing the connection between the base (10) and the head (50), while the opposite upright (501') is oriented in a diverging oblique manner toward the base (10).

5. The clip according to any of claims 1 to 4, **characterized in that** the head (50) is provided with a beak (506) which extends the upright (501) perpendicularly thereto.

6. The clip according to claim 5 when dependent on claim 4, **characterized in that** the beak (506) is tangent to the transverse strand (101).

7. A thermal insulation gasket for a domestic oven, the gasket comprising at least one clip (1) according to any of claims 1 to 6.
